# EUROPEAN PATENT APPLICATION

(11) **EP 2 479 241 A1**
(43) Date of publication of application: **25.07.2012**
(21) Application number: 10817149.7
(22) Date of filing: 14.09.2010
(51) Int. Cl.: C10G 2/00

(54) **METHOD FOR PRODUCING HYDROCARBON OIL AND SYNTHETIC REACTION SYSTEM**

(30) Priority: 16.09.2009 JP 2009214908
(71) Applicant: Japan Oil, Gas and Metals National Corporation, Minato-ku, Tokyo 105-0001 (JP); INPEX Corporation, Tokyo 107-6332 (JP); JX Nippon Oil & Energy Corporation, Chiyoda-ku Tokyo 100-8162 (JP); Japan Petroleum Exploration Co., Ltd., Tokyo 100-0005 (JP); Cosmo Oil Co., Ltd., Tokyo 105-8528 (JP); Nippon Steel Engineering Co., Ltd, Tokyo 141-8604 (JP)
(72) Inventor: TASAKA, Kazuhiko, Yokohama-shi Kanagawa 231-0815 (JP)
(74) Representative: Berryman, Natalia Grace
(86) International application number: PCT/JP2010/065782
(87) International publication number: WO 2011/034036

(57) **Abstract**

A process for producing a hydrocarbon oil from a feedstock gas containing carbon monoxide gas and hydrogen gas using a Fischer-Tropsch synthesis reaction, the process including a hydrocarbon synthesis step of synthesizing hydrocarbons by reacting the carbon monoxide gas and hydrogen gas contained in the feedstock gas within a catalyst particle-containing slurry contained inside a reactor, a powdered particle removal step of filtering the slurry extracted from a top section of a slurry bed inside the reactor, trapping and separating powdered particles formed by powdering of the catalyst particles to obtain liquid hydrocarbons, a catalyst particle trapping step of filtering the slurry extracted from a position lower than the top section of the slurry bed, trapping and separating the catalyst particles to obtain liquid hydrocarbons, and a catalyst particle return step of returning the trapped catalyst particles in the catalyst particle trapping step to the reactor, and a hydrocarbon recovery step of mixing the liquid hydrocarbons obtained in the powdered particle removal step and the liquid hydrocarbons obtained in the catalyst particle trapping step to recover a hydrocarbon oil.

## Description

### TECHNICAL FIELD

The present invention relates to a process for producing a hydrocarbon oil in which powdered particles, specifically powdered particles from catalyst particles, are removed during the synthesis of hydrocarbons by reaction of carbon monoxide gas and hydrogen gas within a slurry containing the catalyst particles, and also relates to a synthesis reaction system.
Priority is claimed on Japanese Patent Application No. 2009-214908, filed September 16, 2009, the content of which is incorporated herein by reference.

### BACKGROUND ART

As a process for producing hydrocarbons that can be used as a feedstock for liquid fuel products such as naphtha (raw gasoline), kerosene and gas oil, a process that employs a Fischer-Tropsch synthesis reaction (hereafter abbreviated as "FT synthesis reaction") which uses a synthesis gas containing mainly carbon monoxide gas (CO) and hydrogen gas (H₂) as a feedstock is already known.
In terms of the synthesis reaction system for synthesizing the hydrocarbons via the FT synthesis reaction, a bubble column slurry bed FT synthesis reaction system in which the FT synthesis reaction is conducted by blowing the synthesis gas through a slurry prepared by suspending solid catalyst particles within a liquid hydrocarbon has been disclosed (see Patent Document 1).

One example of a known bubble column slurry bed FT synthesis reaction system is an external circulation type system including a reactor main unit that contains the slurry and performs the FT synthesis reaction, a gas supply section that blows the synthesis gas into the bottom of the reactor main unit, an outflow line through which the slurry containing the liquid hydrocarbons synthesized inside the reactor main unit is extracted from the reactor main unit, a catalyst separator that separates the liquid hydrocarbons and the catalyst particles from the slurry extracted through the outflow line, and a return line that returns the catalyst particles separated by the catalyst separator and a portion of the liquid hydrocarbons to the reactor main unit.
The catalyst separator in the above FT synthesis reaction system is equipped with a filter having a pore size, for example, of approximately 10 µm. This filter traps the catalyst particles and separates them from the liquid hydrocarbons. Further, by causing the liquid hydrocarbons to flow through the filter in the opposite direction to the normal flow (hereafter referred to as "backwashing"), the trapped catalyst particles can be returned to the reactor main unit through the return line.

### CITATION LIST

### PATENT DOCUMENT

[Patent Document 1] United States Patent Application, Publication No. 2007-0014703

### SUMMARY OF INVENTION

### TECHNICAL PROBLEM

However, the catalyst particles are gradually reduced in size and converted to powdered particles as a result of factors such as friction between catalyst particles, friction against the inside walls of the reactor main unit, and thermal damage caused by the FT synthesis reaction. If the size of these powdered particles decreases to a size smaller than the pore size of the filter within the catalyst separator, then the particles may not be trapped by the filter, but rather pass through the filter together with the liquid hydrocarbons, and flow through to the step for producing a liquid fuel base stock from the crude FT synthesis oil (hereafter referred to as "the upgrading step"). If these powdered particles are introduced into the upgrading step, then they tend to cause deactivation of the catalyst used in the upgrading step, and a deterioration in the quality of the liquid fuels base stock, and consequently the liquid fuel products.

The present invention has been developed in light of the problems outlined above, and has an object of providing a process for producing a hydrocarbon oil in which, by removing in advance those powdered particles having a particle size that has decreased sufficiently to enable passage through the filter of the catalyst separator and those catalyst particles having a particle size approaching such a particle size, the amount of powdered particles can be reduced, the generation of new powdered particles can be suppressed, and powdered particles can be prevented from flowing into the upgrading step. The present invention also has an object of providing a synthesis reaction system to perform the process for producing a hydrocarbon oil.

### SOLUTION TO PROBLEM

A process for producing a hydrocarbon oil according to the present invention is a process for producing a hydrocarbon oil from a feedstock gas containing carbon monoxide gas and hydrogen gas using a Fischer-Tropsch synthesis reaction, the process including a hydrocarbon synthesis step of synthesizing hydrocarbons by reacting the carbon monoxide gas and hydrogen gas contained in the feedstock gas within a catalyst particle-containing slurry contained inside a reactor, a powdered particle removal step of filtering the slurry extracted from a top section of a slurry bed inside the reactor, trapping and separating powdered particles formed by powdering of the catalyst particles to obtain liquid hydrocarbons, a catalyst particle trapping step of filtering the slurry extracted from a position lower than the top section of the slurry bed, trapping and separating the catalyst particles to obtain liquid hydrocarbons, and a catalyst particle return step of returning the trapped catalyst particles in the catalyst particle trapping step to the reactor, and a hydrocarbon recovery step of mixing the liquid hydrocarbons obtained in the powdered particle removal step and the liquid hydrocarbons obtained in the catalyst particle trapping step to recover a hydrocarbon oil.

The process for producing a hydrocarbon oil according to the present invention may further include a first fractional distillation step of fractionally distilling the hydrocarbon oil, a hydroprocessing step of hydroprocessing each fraction of the fractionally distilled hydrocarbon oil from the first fractional distillation step, and a second fractional distillation step of fractionally distilling the hydroprocessed hydrocarbon oil from the hydroprocessing step. In this description, the term "hydroprocessing" includes both the hydrocracking and hydrotreating of hydrocarbons.

A synthesis reaction system of the present invention includes a reactor main unit that contains a catalyst particle-containing slurry and synthesizes hydrocarbons by subjecting carbon monoxide gas and hydrogen gas to a Fischer-Tropsch synthesis reaction, a first outflow line which is connected to a position that corresponds with the top section of the slurry bed inside the reactor main unit under normal operating conditions, and extracts the slurry from the reactor main unit, a powdered particle-trapping filter with a pore size of smaller than 10 µm that filters the slurry extracted through the first outflow line, a second outflow line which is connected to the reactor main unit at a position lower than the first outflow line and extracts the slurry from inside the reactor main unit, a catalyst separator having a catalyst particle-trapping filter which filters the slurry extracted through the second outflow line and traps catalyst particles, and a return line that returns the catalyst particles trapped by the catalyst separator to the reactor main unit.

In the synthesis reaction system of the present invention, the pore size of the catalyst particle-trapping filter may be 10 µm or greater.

### ADVANTAGEOUS EFFECTS OF INVENTION

According to the present invention, powdered particles having a particle size that has decreased sufficiently to enable passage through the catalyst separator and those catalyst particles having a particle size approaching such a particle size are removed, thereby preventing powdered particles from flowing into the upgrading step, and enabling a high-quality hydrocarbon oil to be produced.

### BRIEF DESCRIPTION OF THE DRAWINGS

FIG. 1 is a schematic diagram illustrating the overall configuration of a liquid fuel synthesis system including an example of an embodiment of a synthesis reaction system according to the present invention.
FIG. 2 is a schematic diagram illustrating critical sections of the example of the synthesis reaction system constituting the liquid fuel synthesis system of FIG. 1.

### DESCRIPTION OF EMBODIMENTS

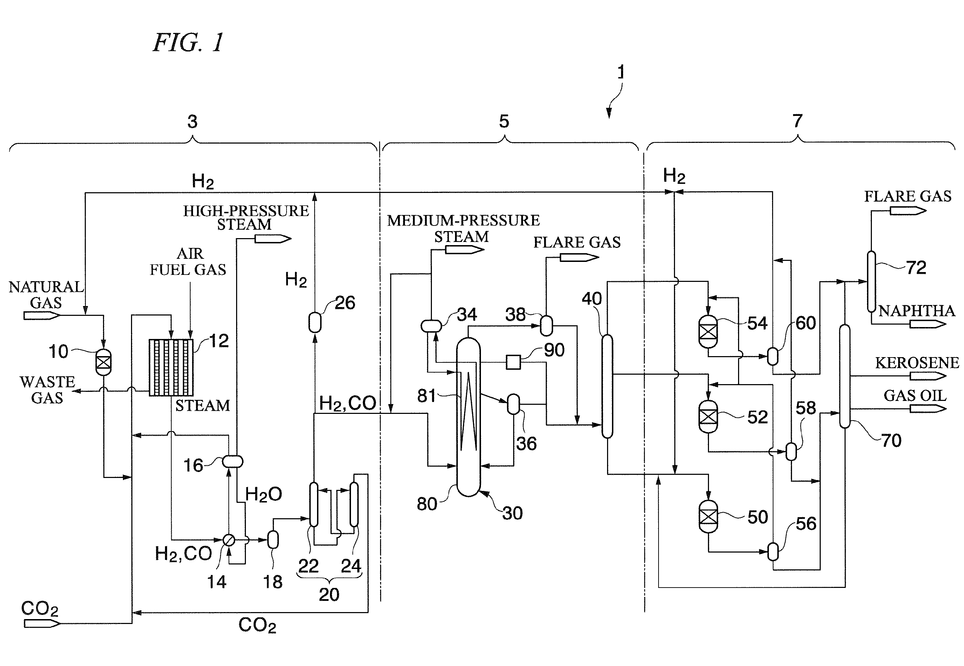

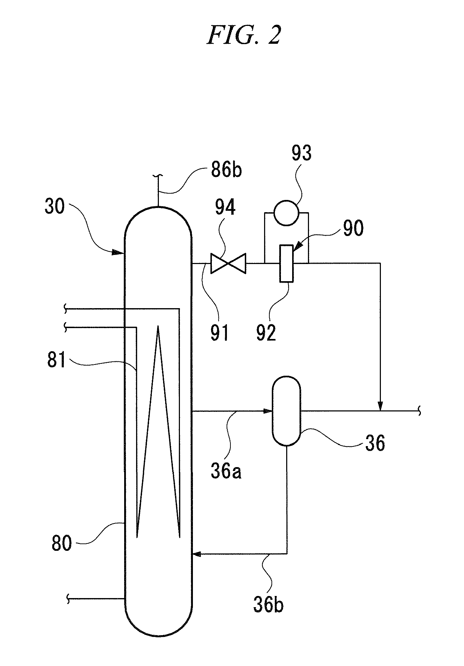

Embodiments of the synthesis reaction system according to the present invention are presented below with reference to FIG. 1 and FIG. 2.
A liquid fuel synthesis system 1 including an example of the synthesis reaction system (hydrocarbon synthesis reaction system) of the embodiment illustrated in FIG. 1 is a plant facility which carries out a GTL process that converts a hydrocarbon feedstock such as a natural gas into liquid fuels.

This liquid fuel synthesis system 1 includes a synthesis gas production unit 3, an FT synthesis unit 5, and an upgrading unit 7. The synthesis gas production unit 3 reforms a natural gas that functions as a hydrocarbon feedstock to produce a synthesis gas containing carbon monoxide gas and hydrogen gas. The FT synthesis unit 5 synthesizes liquid hydrocarbons from the produced synthesis gas via a FT synthesis reaction, and the synthesized hydrocarbon oil is fractionally distilled into individual fractions. The upgrading unit 7 hydroprocesses each of the fractions of the hydrocarbon oil synthesized by the FT synthesis reaction, and further fractionally distills the hydroprocessed hydrocarbon oil to produce a base stock for liquid fuels (such as naphtha, kerosene, gas oil, and wax).

### Structural elements of each of these units are described below.

The synthesis gas production unit 3 is composed mainly of a desulfurization reactor 10, a reformer 12, a waste heat boiler 14, gas-liquid separators 16 and 18, a CO₂ removal unit 20, and a hydrogen separator 26. The desulfurization reactor 10 is composed of a hydrodesulfurizer and the like, and removes sulfur components from the natural gas that functions as the feedstock. The reformer 12 reforms the natural gas supplied from the desulfurization reactor 10 to produce a synthesis gas containing carbon monoxide gas (CO) and hydrogen gas (H₂) as main components. The waste heat boiler 14 recovers waste heat from the synthesis gas produced in the reformer 12 to generate a high-pressure steam. The gas-liquid separator 16 separates the water that has been heated by heat exchange with the synthesis gas in the waste heat boiler 14 into a gas (high-pressure steam) and a liquid. The gas-liquid separator 18 removes a condensed component from the synthesis gas that has been cooled in the waste heat boiler 14, and supplies a gas component to the CO₂ removal unit 20. The CO₂ removal unit 20 has an absorption tower 22 that uses an absorbent to remove carbon dioxide gas from the synthesis gas supplied from the gas-liquid separator 18, and a regeneration tower 24 that releases the carbon dioxide gas absorbed by the absorbent, thereby regenerating the absorbent. The hydrogen separator 26 separates a portion of the hydrogen gas contained within the synthesis gas from which the carbon dioxide gas has already been separated by the CO₂ removal unit 20. In some cases, the above CO₂ removal unit 20 may not need to be provided.

In the reformer 12, for example, by utilizing a steam and carbon dioxide gas reforming method described by the chemical reaction formulas (1) and (2) shown below, the natural gas is reformed by carbon dioxide and steam, and a high-temperature synthesis gas is produced which contains carbon monoxide gas and hydrogen gas as main components. However, the reforming method employed in the reformer 12 is not limited to this steam and carbon dioxide gas reforming method. For example, a steam reforming method, a partial oxidation reforming method (POX) using oxygen, an autothermal reforming method (ATR) that is a combination of a partial oxidation method and a steam reforming method, or a carbon dioxide gas reforming method may also be used.

CH₄ + H₂O → CO + 3H₂ (1)

CH₄ + CO₂ → 2CO + 2H₂ (2)

The hydrogen separator 26 is provided on a branch line that branches off a main line which connects the CO₂ removal unit 20 or gas-liquid separator 18 with the bubble column reactor 30. This hydrogen separator 26 may be composed, for example, of a hydrogen PSA (Pressure Swing Adsorption) device that performs adsorption and desorption of hydrogen gas by utilizing a pressure difference. This hydrogen PSA device has adsorbents (such as a zeolitic adsorbent, activated carbon, alumina or silica gel) packed inside a plurality of adsorption towers (not shown in the drawing) that are arranged in parallel. By sequentially repeating each of the steps of hydrogen gas pressurization, adsorption, desorption (depressurization) and purging within each of these adsorption towers, the hydrogen PSA device can continuously supply a high-purity hydrogen gas (of approximately 99.999% purity) separated from the synthesis gas to the various hydrogen-utilizing reactors (for example, the desulfurization reactor 10, the wax fraction hydrocracking reactor 50, the middle distillate hydrotreating reactor 52, and the naphtha fraction hydrotreating reactor 54) that perform predetermined reactions by utilizing hydrogen gas.

The hydrogen gas separating method employed in the hydrogen separator 26 is not limited to the type of pressure swing adsorption method utilized by the above hydrogen PSA device, and for example, a hydrogen storing alloy adsorption method, a membrane separation method, or a combination thereof may also be used.

Next is a description of the FT synthesis unit 5. The FT synthesis unit 5 mainly includes, for example, a bubble column reactor 30 (a bubble column hydrocarbon synthesis reactor), a gas-liquid separator 34, a catalyst separator 36, a gas-liquid separator 38, a first fractionator 40, and a powdered particle removal unit 90.
The bubble column reactor 30 is an example of a reactor that synthesizes hydrocarbon oil from a synthesis gas, and functions as a FT synthesis reactor that synthesizes hydrocarbon oil from the synthesis gas by a FT synthesis reaction.
This bubble column reactor 30 is composed mainly of a reactor main unit 80 and a cooling tube 81.

The reactor main unit 80 is a substantially cylindrical metal vessel, the inside of which contains a slurry prepared by suspending solid catalyst particles within liquid hydrocarbons (the FT synthesis reaction product).
The synthesis gas containing carbon monoxide gas and hydrogen gas as main components is injected into the slurry from a position in the bottom section of the reactor main unit 80. This synthesis gas that has been injected into the slurry forms bubbles that rise up through the slurry along the height-wise direction (vertical direction) of the reactor main unit 80 from bottom to top. During this process, the synthesis gas dissolves in the liquid hydrocarbons and makes contact with the catalyst particles, causing the synthesis reaction of the hydrocarbons (the FT synthesis reaction) to proceed. Specifically, the carbon monoxide gas and hydrogen gas react via the type of chemical reaction formula (3) shown below to produce hydrocarbons.

2nH₂ + nCO → (CH₂)ₙ + nH₂O (3)

Further, as the synthesis gas rises up through the inside of the reactor main unit 80 in the form of gas bubbles, an upward flow (air lift) is generated within the slurry inside the reactor main unit 80. As a result, a circulating flow is generated within the slurry inside the reactor main unit 80. Unreacted synthesis gas and generated hydrocarbons that exist in a gaseous state under the conditions in the bubble column reactor 30 passing through the slurry bed and reaching the gas phase part thereupon are discharged from the top of the reactor main unit 80 and supplied to the gas-liquid separator 38.

The cooling tube 81 is provided inside the reactor main unit 80, and cools the slurry, the temperature of which rises as a result of the heat generated by the FT synthesis reaction. This cooling tube 81 may be formed, for example, by bending a single tube so that it runs up and down a plurality of times along the vertical direction. Further, a plurality of cooling tubes having a so-called bayonet double-tube structure may also be installed inside the reactor main unit 80. In other words, the shape and number of cooling tubes 81 is not limited to the shape and number described above, and any structure that can be arranged evenly within the reactor main unit 80 and contributes to uniform cooling of the slurry may be used.

Cooling water (for example, water having a temperature that is 0 to 50°C lower than the temperature inside the reactor main unit 80) supplied from the gas-liquid separator 34 is passed through the cooling tube 81, and cools the slurry inside the reactor main unit 80 during this passage through the inside of the cooling tube 81 by heat exchange with the slurry via the walls of the cooling tube 81. A portion of the cooling water is converted to steam, which is discharged to the gas-liquid separator 34 and recovered as medium-pressure steam.
The coolant used for cooling the slurry is not limited to the type of cooling water described above, and for example, C₄ to C₁₀ straight-chain, branched-chain or cyclic alkanes, olefins, low-molecular weight silanes, silyl ethers or silicone oils may also be used.

As illustrated in FIG. 2, the powdered particle removal unit 90 includes a first outflow line 91 for extracting the slurry from inside the reactor main unit 80, a powdered particle-trapping filter 92 that filters the slurry extracted via the first outflow line 91, a pressure difference meter 93 that measures the pressure difference between positions before and after the powdered particle-trapping filter 92, and a closeable valve 94 that is installed in the first outflow line 91.

The first outflow line 91 is connected to the reactor main unit 80 in a position that enables the slurry to be extracted from the top section of the slurry bed inside the reactor main unit 80. In this description, if the bottom-most point in the vertical direction of the slurry bed contained inside the reactor main unit 80 (namely, the bottom of the reactor main unit 80) is deemed 0% and the liquid surface at the uppermost point of the slurry bed is deemed 100%, then the expression "top section of the slurry bed inside the reactor main unit 80" describes the section of the slurry bed from 70% upward. The height of the slurry bed liquid surface refers to the height of the liquid surface of the slurry bed inside the reactor main unit 80 under normal operating conditions for the reactor. Of the various possible values for the top section of the slurry bed inside the reactor main unit 80, a position of not less than 80% but not more than 95% under the above criteria is preferred.

The position where the first outflow line 91 is connected to the reactor main unit 80 is also set so that if, relative to the position of the bottom of the reactor main unit 80, the height of a position on the reactor main unit 80 corresponding with the height of the liquid surface of the slurry bed inside the reactor main unit 80 under normal operating conditions is deemed to be 100%, then the first outflow line 91 is connected at a position equivalent to a value of 70% or higher. This position of connection is preferably within a range from 80 to 95%.
In terms of enabling more efficient removal of the powdered particles, the first outflow line 91 is preferably positioned as close as possible to the liquid surface of the slurry, but if the position is too high, then the fluctuations in the height of the slurry liquid surface that accompany operation of the reactor may cause the height of the liquid surface to fall below the position of connection of the first outflow line 91, making it impossible to extract the slurry through the first outflow line 91.

The powdered particle-trapping filter 92 must be capable of trapping powdered particles generated by powdering of the catalyst particles through friction between catalyst particles, friction against the inside walls of the reactor main unit 80, and thermal damage caused by the FT synthesis reaction. Specifically, the powdered particle-trapping filter 92 should have a pore size of smaller than 10 µm, and preferably equal to or smaller than 7 µm. On the other hand, the pore size of the powdered particle-trapping filter 92 is preferably equal to or larger than 5 µm.
A sintered metal filter such as a metal mesh sintered filter may be used as the powdered particle-trapping filter 92. Sintered metal filters are produced by bonding a metal mesh or powder or the like by heating at a temperature lower than the melting point of the metal. A metal mesh sintered filter is prepared by superimposing a plurality of layers of a metal mesh and then sintering the resulting structure at high temperature in a vacuum, and the size of the pores formed in the metal mesh sintered filter can be altered by adjusting the mesh size of the metal mesh and the number of layers of superimposed mesh.

The liquid hydrocarbons obtained following removal of the powdered particles from the slurry by the powdered particle-trapping filter 92 are combined with the liquid hydrocarbons that have passed through the catalyst separator 36, and the combined liquid hydrocarbons are then fed into the first fractionator 40 as a hydrocarbon oil.

The gas-liquid separator 34 separates the water that has been heated by passage through the cooling tube 81 provided inside the bubble column reactor 30 into a steam (medium-pressure steam) and a liquid, and the liquid is re-supplied to the cooling tube 81 as cooling water.
The catalyst separator 36 has a filter for trapping the catalyst particles and separating them from the liquid hydrocarbons that constitute the slurry. The filter may be composed of either a single stage or multiple stages positioned along the flow direction of the slurry. The pore size of the filter (the smallest pore size in the case of a multistage filter) is typically at least 10 µm, preferably within a range from 10 to 20 µm, and more preferably from 10 to 15 µm. Further, a second outflow line 36a connected to the middle section of the reactor main unit 80 is connected to the top section of the catalyst separator 36, whereas a return line 36b that is connected to the bottom section of the reactor main unit 80 is connected to the lower section of the catalyst separator 36. The position of connection of the second outflow line 36a to the reactor main unit 80 is lower than that of the first outflow line 91 to the reactor main unit 80. Here, the expression "lower section of the reactor main unit 80" refers to the section from the bottom of the reactor main unit 80 up to 1/3 of the whole height of the reactor main unit 80, whereas the expression "middle section of the reactor main unit 80" refers to the section higher than the bottom section and lower than the position of connection of the first outflow line 91 to the reactor main unit 80.

The return line 36b is used for returning the catalyst particles trapped by the filter and the liquid hydrocarbons to the reactor main unit 80 when the filter of the catalyst separator 36 is subjected to backwashing.
The gas-liquid separator 38 is connected to an unreacted gas outlet 86b of the bubble column reactor 30 at the top thereof, cools the unreacted synthesis gas and those hydrocarbons produced by the FT synthesis reaction that exist in a gaseous state under the conditions in the bubble column reactor 30, and condenses a portion of the hydrocarbons to separate the generated liquid hydrocarbons from the gaseous component. The first fractionator 40 fractionally distills the hydrocarbon oil which is a mixture of the liquid hydrocarbons supplied from the bubble column reactor 30 via the powdered particle removal unit 90, the catalyst separator 36, and the gas-liquid separator 38, respectively, into respective fractions.

The upgrading unit 7 includes, for example, a wax fraction hydrocracking reactor 50, a middle distillate hydrotreating reactor 52, a naphtha fraction hydrotreating reactor 54, gas-liquid separators 56, 58 and 60, a second fractionator 70, and a naphtha stabilizer 72. The wax fraction hydrocracking reactor 50 is connected to the bottom of the first fractionator 40. The middle distillate hydrotreating reactor 52 is connected to a middle section of the first fractionator 40. The naphtha fraction hydrotreating reactor 54 is connected to the top section of the first fractionator 40. The gas-liquid separators 56, 58 and 60 are provided so as to correspond to the hydroprocessing reactors 50, 52 and 54 respectively. The second fractionator 70 fractionally distills the hydrocarbon oil supplied from the gas-liquid separators 56 and 58 in accordance with their respective boiling points. The naphtha stabilizer 72 fractionally distills the hydrocarbon oil within the naphtha fraction supplied from the gas-liquid separator 60 and the second fractionator 70, and the resulting gas component of C₄ or less is discharged as a flare gas, while the components having a carbon number of 5 or greater are separated and recovered as a naphtha product.

Next is a description of a process for producing a hydrocarbon oil from a natural gas (GTL process) using the liquid fuel synthesis system 1 including an example of the embodiment of the synthesis reaction system having the configuration described above.

A natural gas (the main component of which is CH₄) is supplied as a hydrocarbon feedstock to the liquid fuel synthesis system 1 from an external natural gas supply source (not shown in the drawing), such as a natural gas field or a natural gas plant. The above synthesis gas production unit 3 reforms the natural gas to produce a synthesis gas (a mixed gas containing carbon monoxide gas and hydrogen gas as main components).

Specifically, first, the natural gas described above is introduced into the desulfurization reactor 10 together with the hydrogen gas separated by the hydrogen separator 26. In the desulfurization reactor 10, sulfur components contained in the natural gas are converted into a hydrogen sulfide by the introduced hydrogen gas under the conventional action of a hydrodesulfurization catalyst, thus the generated hydrogen sulfide is adsorbed by an absorber such as ZnO. By subjecting the natural gas to a preliminary hydrodesulfurization in this manner, any deactivation of the catalysts used in the reformer 12 and the bubble column reactor 30 caused by sulfur compounds can be prevented.

The natural gas (which may also contain a carbon dioxide) that has been desulfurized in this manner is supplied to the reformer 12 after mixing with carbon dioxide gas (CO₂) supplied from a carbon dioxide supply source (not shown in the drawing) and the steam generated in the waste heat boiler 14. In the reformer 12, the natural gas is reformed by the carbon dioxide gas and the steam via a steam-carbon dioxide reforming process, thereby producing a high-temperature synthesis gas including carbon monoxide gas and hydrogen gas as main components. At this time, a fuel gas and air for a burner installed in the reformer 12 are supplied to the reformer 12, and the combustion heat from the fuel gas in the burner and the radiant heat from the furnace of the reformer 12 are used to provide the necessary heat for the above steam-carbon dioxide gas reforming reaction, which is an endothermic reaction.

The high-temperature synthesis gas (for example, 900°C, 2.0 MPaG) produced in the reformer 12 in this manner is supplied to the waste heat boiler 14, and is cooled (for example, to 400°C) by heat exchange with the water circulating through the waste heat boiler 14, thereby recovering the waste heat from the synthesis gas. At this time, the water heated by the synthesis gas in the waste heat boiler 14 is supplied to the gas-liquid separator 16. In the gas-liquid separator 16, the gaseous component of the water is supplied as high-pressure steam (for example, 3.4 to 10.0 MPaG) to the reformer 12 or other external devices, and the liquid water is returned to the waste heat boiler 14.

Meanwhile, the synthesis gas that has been cooled within the waste heat boiler 14 is supplied to either the absorption tower 22 of the CO₂ removal unit 20 or the bubble column reactor 30, after a condensed liquid fraction has been separated and removed from the synthesis gas in the gas-liquid separator 18. In the absorption tower 22, carbon dioxide gas contained in the synthesis gas is absorbed by an absorbent contained within the absorption tower 22, thereby removing the carbon dioxide gas from the synthesis gas. The absorbent that has absorbed the carbon dioxide gas within the absorption tower 22 is introduced into the regeneration tower 24, and this absorbent containing the absorbed carbon dioxide gas is then heated, for example with steam, and subjected to a stripping treatment to release the carbon dioxide gas, which is subsequently fed from the regeneration tower 24 to the reformer 12 and reused for the above reforming reaction.

The synthesis gas produced in the synthesis gas production unit 3 in this manner is supplied to the bubble column reactor 30 of the aforementioned FT synthesis unit 5. At this time, the composition ratio of the synthesis gas supplied to the bubble column reactor 30 is adjusted to a composition ratio suitable for the FT synthesis reaction (for example, H₂:CO = 2:1 (molar ratio)). In addition, the synthesis gas supplied to the bubble column reactor 30 is pressurized to a pressure suitable for the FT synthesis reaction (for example, 3.6 MPaG) by a compressor (not shown in the drawing) provided in the line that connects the CO₂ removal unit 20 with the bubble column reactor 30. In some cases, this compressor need not be provided.

Furthermore, a portion of the synthesis gas that has undergone separation of the carbon dioxide gas by the above CO₂ removal unit 20 is also supplied to the hydrogen separator 26. In the hydrogen separator 26, the hydrogen gas contained in the synthesis gas is separated by adsorption and desorption utilizing a pressure difference (hydrogen PSA). The separated hydrogen gas is supplied continuously from a gas holder or the like (not shown in the drawing) via a compressor (not shown in the drawing) to the various hydrogen gas-utilizing reactors (for example, the desulfurization reactor 10, the wax fraction hydrocracking reactor 50, the middle distillate hydrotreating reactor 52, and the naphtha fraction hydrotreating reactor 54) within the liquid fuel synthesis system 1 that perform predetermined reactions by utilizing hydrogen gas.

Next, the FT synthesis unit 5 synthesizes a hydrocarbon oil by the FT synthesis reaction from the synthesis gas produced in the above synthesis gas production unit 3. The process for producing a liquid hydrocarbon oil is described below.

Specifically, the synthesis gas produced in the synthesis gas production unit 3 is introduced into the bottom of the reactor main unit 80 that constitutes the bubble column reactor 30, and rises up through the slurry contained within the reactor main unit 80. During this time within the reactor main unit 80, the carbon monoxide gas and hydrogen gas contained within the synthesis gas react with each other by the aforementioned FT synthesis reaction, and hydrocarbons are produced (hydrocarbon synthesis step).
Conditions inside the reactor main unit 80 conducting the FT synthesis reaction are not specifically limited, and for example, the pressure is 1-5MPaG and the temperature is 170-350°C.
Moreover, during this synthesis reaction, the reaction heat of the FT synthesis reaction is recovered by passing water through the cooling tube 81, and the water that has been heated by this reaction heat is vaporized into steam. This steam is supplied to the gas-liquid separator 34, and the liquefied water is returned to the cooling tube 81, while the gas fraction is supplied to an external device as a medium-pressure steam (for example, 1.0 to 2.5 MPaG).

A portion of the slurry containing the liquid hydrocarbons and catalyst particles within the reactor main unit 80 of the bubble column reactor 30 is extracted from the middle section of the reactor main unit 80 via the second outflow line 36a, and introduced into the catalyst separator 36. In the catalyst separator 36, the introduced slurry is filtered through a filter to trap the catalyst particles. This filtering separates the slurry into a solid fraction and a liquid fraction containing liquid hydrocarbons (catalyst particle trapping step).
The filter of the catalyst separator 36 is subjected to backwashing as appropriate to remove the trapped catalyst particles from the filter surface and return those catalyst particles to the reactor main unit 80. At this time, the catalyst particles trapped by the filter are returned to the reactor main unit 80, together with a portion of the liquid hydrocarbons, via the return line 36b.

A catalyst active for the FT synthesis reaction used in the embodiment is not specifically limited, and a conventional catalyst can be used. Examples of such catalysts include catalysts comprising at least one metal selected from cobalt, ruthenium, iron, nickel and the like as an active metal loaded on a support such as silica or alumina. Average particle size of the catalyst is not specifically limited, and is preferably from 40 to 150 µm in order to enable the slurry containing the catalyst particles to be easily fluidized inside the reactor main unit 80. Moreover, the particle size distribution of the catalyst particles is not limited, and it is preferable that the catalyst particles do not substantially contain those particles having a particle size small enough to pass through the filter of the catalyst separator 36 (for example, 10 µm or less).
In the embodiment, "powdered particles" refers to the particles, originated from the catalyst particles, having a reduced particle size small enough to pass through the filter of the catalyst separator 36.

Furthermore, the slurry is also extracted from the top section of the slurry bed inside the reactor main unit 80 through the first outflow line 91. Here, "the top section of the slurry bed" refers to the section defined in the above description of the explanation about the embodiment of the synthesis reaction system. Because powdered particles generated by powdering of the catalyst particles through friction between catalyst particles, friction against the inside walls of the reactor main unit 80, and thermal damage caused by the FT synthesis reaction tend to float near the surface of the slurry inside the reactor main unit 80, the slurry extracted from the top section of the reactor main unit 80 contains a large amount of powdered particles. This slurry containing a large amount of powdered particles is passed through the powdered particle-trapping filter 92, thereby trapping the powdered particles on the powder particle-trapping filter 92.
The liquid hydrocarbons obtained following removal of the powdered particles by the powdered particle-trapping filter 92 are mixed with the liquid hydrocarbons discharged from the catalyst separator 36 to form a hydrocarbon oil, and the hydrocarbon oil is brought to the first fractionator 40.

In the present embodiment, during removal of the powdered particles by filtering the slurry through the powdered particle-trapping filter 92, the pressure difference meter 93 is used to measure the pressure difference between positions before and after the powdered particle-trapping filter 92. This pressure difference indicates the pressure loss at the powdered particle-trapping filter 92, and the larger this pressure difference becomes, the more powdered particles there are trapped on the filter, causing potential blocking of the filter pores. Accordingly, when the pressure difference reaches a predetermined value, the powdered particles trapped on the powdered particle-trapping filter 92 are removed by scraping or the like. The removed powdered particles are a waste component, and are prevented from returning to the reactor main unit 80 (powdered particle removal step).
In order to remove the powdered particles trapped on the powdered particle-trapping filter 92, for example, the closeable valve 94 is closed to halt supply of the slurry to the powdered particle-trapping filter 92, and the powdered particles deposited on the surface of the powdered particle-trapping filter 92 are then scraped away. The scraped powdered particles are discarded. Subsequently, the closeable valve 94 is reopened, and supply of the slurry to the powdered particle-trapping filter 92 is restarted. The above powdered particle removal operation may be performed manually, but may also be automated.

Furthermore, a mixture of unreacted synthesis gas and those hydrocarbons generated by the reaction that exist in a gaseous state under the conditions inside the reactor is discharged from the top of the bubble column reactor 30 and introduced into the gas-liquid separator 38. In the gas-liquid separator 38, this mixture is cooled, and condensed liquid hydrocarbons are separated from a gaseous component. The separated liquid hydrocarbons may be mixed with the liquid hydrocarbons discharged from the powdered particle removal unit 90 and the catalyst separator 36, respectively, and may form a hydrocarbon oil. Thus, it is possible to recover larger amount of the hydrocarbon oil, i.e. liquid hydrocarbons, from the hydrocarbons synthesized by the FT synthesis reaction. Then, the hydrocarbon oil is introduced into the first fractionator 40. The gas component separated by the gas-liquid separator 38, which is a mixed gas containing the unreacted synthesis gas (CO and H₂) and hydrocarbons with a low carbon number (C₄ or less) as main components, is recycled back into the bubble column reactor 30, and the unreacted synthesis gas contained within the mixed gas is subjected to the FT synthesis reaction again. In order to prevent this recycling of the mixed gas causing an accumulation of a high concentration of gaseous hydrocarbons of mainly C₄ or less inside the FT synthesis reaction system, a portion of the mixed gas is not recycled back into the bubble column reactor 30, but is rather brought to a combustion facility (flare stack, not shown in the drawings) outside the main system, where it is combusted and discharged into the atmosphere.

Subsequently, in the first fractionator 40, the hydrocarbon hydrocarbon oil (with varying carbon numbers) that is a mixture composed of the liquid hydrocarbons supplied from the bubble column reactor 30, via the catalyst separator 36, the powdered particle removal unit 90, and the gas-liquid separator 38, respectively, in the manner described above is fractionally distilled into a naphtha fraction (with a boiling point that is lower than approximately 150°C), a middle distillate (with a boiling point of approximately 150 to 360°C), and a wax fraction (with a boiling point that exceeds approximately 360°C)

### (first fractional distillation step)

Subsequently, the upgrading unit 7 hydroprocesses each of the fractions of the hydrocarbon oil obtained in the first fractional distillation step (hydroprocessing step), and further fractionally distills the hydroprocessed hydrocarbon oil obtained in the hydroprocessing step (second fractional distillation step) to produce a hydrocarbon oil used for a base stock for liquid fuels (such as naphtha, kerosene, and gas oil).

The hydrocarbon oil of the wax fraction (mainly hydrocarbons of C₂₁ or more) discharged from the bottom of the first fractionator 40 is brought into the wax fraction hydrocracking reactor 50. The hydrocarbon oil of the middle distillate (mainly C₁ to C₂₀ hydrocarbons) discharged from the middle section of the first fractionator 40 is brought into the middle distillate hydrotreating reactor 52. The hydrocarbon oil of the naphtha fraction (mainly C₅ to C₁₀ hydrocarbons) discharged from the top of the first fractionator 40 is brought into the naphtha fraction hydrotreating reactor 54.
The hydroprocessing mentioned above includes the hydrocracking of the wax fraction in the wax fraction hydrocracking reactor 50, the hydrotreating of the middle distillate in the middle distillate hydrotreating reactor 52, and the hydrotreating of the naphtha fraction in the naphtha fraction hydrotreating reactor 54.

The wax fraction hydrocracking reactor 50 hydrocracks the hydrocarbon oil of the high-carbon number wax fraction (hydrocarbons of approximately C₂₁ or more) discharged from the bottom of the first fractionator 40, by using the hydrogen gas supplied from the above hydrogen separator 26 to reduce the carbon number to approximately C₂₀ or less. In this hydrocracking reaction, C-C bonds of hydrocarbons with a large carbon number are cleaved by the action of a catalyst and heat, thereby producing hydrocarbons with a smaller carbon number. Moreover, at least a portion of normal paraffin hydrocarbons composing the wax fraction are hydroisomerized to be converted into isoparaffin hydrocarbons. As a result, low-temperature fluidity of the hydrocracked product as a base stock for fuel oil is improved. Further, olefinic hydrocarbons contained within a wax fraction as impurities are hydrogenated to be converted into paraffinic hydrocarbons. Also, oxygen-containing compounds represented by alcohols are hydrodeoxygenated to be converted into paraffinic hydrocarbons. The hydrocracked products in the wax fraction hydrocracking reactor 50 are separated into a gas component and a liquid component by the gas-liquid separator 56. The separated liquid component is brought into the second fractionator 70, whereas the separated gas component (including hydrogen gas) is brought into the middle distillate hydrotreating reactor 52 and the naphtha fraction hydrotreating reactor 54.

A hydrocracking catalyst charged inside the wax fraction hydrocracking reactor 50 is not limited, and a conventional catalyst is used. Examples of the hydrocracking catalysts include catalysts comprising metal belonging to the Groups 8-10 of the Periodic Table as an active metal loaded on a support having solid acidity. Specific examples of the supports include supports containing one or more inorganic oxides selected from among crystalline zeolites such as ultra-stable Y type (USY) zeolite, and amorphous composite metal oxides such as silica-alumina, silica-zirconia and alumina-boria. The support preferably contains a zeolite and an amorphous composite metal oxide, and more preferably contains USY zeolite and one or more amorphous composite metal oxides selected from among silica-alumina, silica-zirconia and alumina-boria.
Specific examples of the metal belonging to the Groups 8-10 of the Periodic Table include cobalt, nickel, rhodium, palladium, iridium and platinum. Of these, the use of either one metal or a combination of two or more metals selected from among palladium and platinum is preferred.

Reaction conditions in the wax fraction hydrocracking reactor 50 are not specifically limited, and the hydrogen partial pressure is typically within a range from 0.5 to 12 MPa, and is preferably from 1.0 to 5.0 MPa.
The liquid hourly space velocity (LHSV) is typically within a range from 0.1 to 10.0 h⁻¹, and is preferably from 0.3 to 3.5 h⁻¹. The ratio between the hydrogen gas and the wax fraction (hydrogen gas/oil ratio) is not particularly limited, but is typically within a range from 50 to 1,000 NL/L, and is preferably from 70 to 800 NL/L.
In this description, the LHSV (liquid hourly space velocity) describes the volumetric flow rate of the wax fraction under standard conditions (25°C, 101,325 Pa) per unit volume of the layer of the catalyst (the catalyst layer) charged into the fixed-bed flow reactor, wherein the units "h⁻¹" represent the inverse of "hour". Further, the units "NL" for the hydrogen volume within the hydrogen gas/oil ratio represent the hydrogen gas volume (L) under standard conditions (0°C, 101,325 Pa).
The reaction temperature in the wax fraction hydrocracking reactor (namely, the catalyst weighted average bed temperature) is typically within a range from 180 to 400°C, and is preferably from 200 to 370°C, more preferably from 250 to 350°C, and still more preferably from 280 to 350°C.

In the middle distillate hydrotreating reactor 52, the hydrocarbon oil of the middle distillate having a mid-range carbon number (of approximately C₁₁ to C₂₀) that has been discharged from the middle section of the first fractionator 40 is hydrotreated using hydrogen gas supplied from the hydrogen separator 26 via the wax fraction hydrocracking reactor 50. In this hydrotreating reaction, in order to obtain branched saturated hydrocarbons, mainly for the purpose of improving the low-temperature fluidity of the product for use as a base stock for fuel oils, the hydrocarbon oil is subjected to hydroisomerization, and the unsaturated hydrocarbons contained within the hydrocarbon oil are saturated by the addition of hydrogen. Moreover, the oxygen-containing compounds such as alcohols contained within the hydrocarbon oil are hydrodeoxygenated and converted to saturated hydrocarbons. The product including the hydrotreated hydrocarbon oil is separated into a gas component and a liquid component in the gas-liquid separator 58. The separated liquid component is brought into the second fractionator 70, and the separated gas component (including hydrogen gas) is reused for the above hydroprocessing reactions.

A hydrotreating catalyst charged inside the middle distillate hydrotreating reactor 52 is not limited, and a conventional catalyst is used. Examples of the hydrotreating catalysts include catalysts comprising metal belonging to the Groups 8-10 of the Periodic Table as an active metal loaded on a support having solid acidity. Specific examples of the supports include supports containing one or more amorphous composite metal oxides having solid acidity such as silica-alumina, silica-zirconia and alumina-boria. The support may contain a small amount of zeolites such as USY zeolite.
Specific examples of the metal belonging to the Groups 8-10 of the Periodic Table include cobalt, nickel, rhodium, palladium, iridium and platinum. Of these, the use of either one metal or a combination of two or more metals selected from among palladium and platinum is preferred.

Reaction conditions in the middle distillate hydrotreating reactor 52 are not specifically limited, and the reaction conditions similar to those in the wax fraction hydrocracking reactor 50 are preferably adopted.

In the naphtha fraction hydrotreating reactor 54, the hydrocarbon oil of the naphtha fraction having a low carbon number (of approximately C₁₀ or less) supplied from the top of the first fractionator 40 is hydrotreated using hydrogen gas supplied from the hydrogen separator 26 via the wax fraction hydrocracking reactor 50. As a result, the unsaturated hydrocarbons and oxygen-containing compounds such as alcohols contained within the supplied naphtha fraction are converted to saturated hydrocarbons. The product including the hydrotreated hydrocarbon oil is separated into a gas component and a liquid component in the gas-liquid separator 60. The separated liquid component is brought into the naphtha stabilizer 72, and the separated gas fraction (including hydrogen gas) is reused for the above hydrogenation reactions.

A hydrotreating catalyst charged inside the naphtha fraction hydrotreating reactor 54 is not limited, and the same catalyst used in the middle distillate hydrotreating reactor 52 is preferably used.

Reaction conditions in the naphtha fraction hydrotreating reactor 54 are not specifically limited, and the reaction conditions similar to those in the wax fraction hydrocracking reactor 50 are preferably adopted.

Subsequently, in the second fractionator 70, the hydrocarbon oil supplied from the wax fraction hydrocracking reactor 50 and the middle distillate hydrotreating reactor 52 in the manner described above is fractionally distilled into hydrocarbon oil with a carbon number of C₁₀ or less (with boiling points lower than approximately 150°C), a kerosene fraction (with a boiling point of approximately 150 to 250°C), a gas oil fraction (with a boiling point of approximately 250 to 360°C) and an uncracked wax fraction (with a boiling point exceeding approximately 360°C). The gas oil fraction is discharged from the lower section of the second fractionator 70, and the kerosene fraction is discharged from the middle section of the second fractionator 70. Hydrocarbons with a carbon number of C₁₀ or less are discharged from the top of the second fractionator 70, and supplied to the naphtha stabilizer 72. Meanwhile, uncracked wax fraction is discharged from the bottom of the second fractionator 70, returned to upstream from the wax fraction hydrocracking reactor 50, and subjected to hydrocracking again.

Moreover, in the naphtha stabilizer 72, the hydrocarbons with a carbon number of C₁₀ or less supplied from the naphtha fraction hydrotreating reactor 54 and the second fractionator 70 are fractionally distilled, and refined naphtha (C₅ to C₁₀) is separated as a product. Accordingly, high-purity naphtha is discharged from the bottom of the naphtha stabilizer 72. Meanwhile, a flare gas including mainly hydrocarbons no higher than C₄, namely hydrocarbons other than the targeted product, is discharged from the top of the naphtha stabilizer 72. This flare gas is brought to an external combustion facility (not shown in the drawings), where it is combusted and then discharged into the atmosphere.

In the present embodiment, a slurry containing a large amount of floating powdered particles near the liquid surface of the slurry is extracted, via the first outflow line 91, from the top section of the slurry bed inside the reactor main unit 80. By trapping and discarding the powdered particles contained within this extracted slurry using the powdered particle-trapping filter 92, powdered particles having a particle size small enough to pass through the filter of the catalyst separator 36 and catalyst particles having a reduced particle size approaching a size that is small enough to pass through the filter of the catalyst separator 36 (hereafter referred to as "powdered particles and the like") can be efficiently removed. As a result, the amount of powdered particles and the like inside the reactor main unit 80 can be reduced. By removing these types of powdered particles and the like, the generation of new powdered particles can be suppressed at the same time as reducing the amount of powdered particles. This procedure enables the introduction of powdered particles into the upgrading step to be suppressed. Accordingly, any deterioration in the quality of the liquid fuel products obtained from the liquid fuel synthesis system 1, as well as deactivation of the catalysts in the hydroprocessing reactors caused by introduction of the powdered particles thereinto, can be prevented.

Further, even in those cases where the pore size of the filter within the catalyst separator 36 is reduced to better prevent the introduction of powdered particles into the upgrading step, the time taken for this filter to become blocked can be extended.
Furthermore, because the catalysts used for hydroprocessing in the upgrading step can be prevented from deactivation under the action of powdered particles, maintenance of the upgrading unit 7 (device) that produces liquid fuel products using the hydrocarbon oil is simplified, and the upgrading unit 7 can be operated continuously in a stable manner for long periods of time.

While preferred embodiments of the present invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.
For example, in the embodiments described above, the powdered particle removal unit 90 was provided with a pressure difference meter 93, but this pressure difference meter 93 may be omitted. In such a case, the powdered particle-trapping filter 92 is preferably exchanged, for example, after a predetermined time has elapsed.

Furthermore, the powdered particle-trapping filter 92 may include a plurality of filters arranged in parallel. In such a case, at least one of the filters may be used as a backup. In this case, the slurry is not supplied to the backup powdered particle-trapping filter initially, but when the amount of trapped powdered particles increases and the main powdered particle-trapping filter 92 requires maintenance, supply of the slurry to the backup filter may be started. Then, supply of the slurry to the powdered particle-trapping filter 92 that requires maintenance is halted, and following maintenance, this powdered particle-trapping filter 92 can be used as the backup filter. In this manner, by installing a plurality of powdered particle-trapping filters 92 in parallel, provided at least one filter is retained for exchange purposes, the removal of powdered particles can be performed continuously.

A device for ensuring that catalyst particles which are larger than the powdered particles that the powdered particle-trapping filter 92 is designed to trap and remove do not reach the powdered particle-trapping filter 92, for example a filter with a large pore size than that of the powdered particle-trapping filter 92, may be installed upstream from the powdered particle-trapping filter 92. In that case, trapped catalyst particles on that filter may be returned to the reactor main unit 80 by backwashing.

In the above embodiments, a liquid fuel synthesis system 1 for converting a hydrocarbon feed stock such as a natural gas to liquid fuels was described, but the present invention is not only for application to the case using natural gas as a feedstock, and can also be applied to the case using hydrocarbon feedstocks other than natural gas, such as asphalt and residual oils. In other words, the present invention can be applied to any system that synthesizes a hydrocarbon oil by contacting a catalyst-containing slurry and a feedstock gas containing at least carbon monoxide gas and hydrogen gas.

### INDUSTRIAL APPLICABILITY

The present invention relates to a process for producing a hydrocarbon oil from a feedstock gas containing carbon monoxide gas and hydrogen gas using a FT synthesis reaction, the process including a hydrocarbon synthesis step of synthesizing hydrocarbons by reacting the carbon monoxide gas and hydrogen gas contained in the feedstock gas within a catalyst particle-containing slurry contained inside a reactor, a powdered particle removal step of filtering the slurry extracted from a top section of a slurry bed inside the reactor, trapping and separating powdered particles formed by powdering of the catalyst particles to obtain liquid hydrocarbons, a catalyst particle trapping step of filtering the slurry extracted from a position lower than the top section of the slurry bed, trapping and separating the catalyst particles to obtain liquid hydrocarbons, and a catalyst particle return step of returning the trapped catalyst particles in the catalyst particle trapping step to the reactor, and a hydrocarbon recovery step of mixing the liquid hydrocarbons obtained in the powdered particle removal step and the liquid hydrocarbons obtained in the catalyst particle trapping step to recover a hydrocarbon oil, and also a synthesis reaction system for performing the aforementioned process for producing a hydrocarbon oil.
According to the present invention, powdered particles can be prevented from flowing into the upgrading step, and therefore a high-quality hydrocarbon oil can be produced.

### DESCRIPTION OF THE REFERENCE SYMBOLS

1: Liquid fuel synthesis system
30: Bubble column reactor (bubble column hydrocarbon synthesis reactor)
36: Catalyst separator
36a: Second outflow line
36b: Return line
80: Reactor main unit
90: Powdered particle removal unit
91: First outflow line
92: Powdered particle-trapping filter
93: Pressure difference meter

## Claims

1. A process for producing a hydrocarbon oil from a feedstock gas containing carbon monoxide gas and hydrogen gas using a Fischer-Tropsch synthesis reaction, said process comprising:
a hydrocarbon synthesis step of synthesizing hydrocarbons by reacting said carbon monoxide gas and hydrogen gas contained in said feedstock gas within a catalyst particle-containing slurry contained inside a reactor;
a powdered particle removal step of filtering the slurry extracted from a top section of a slurry bed inside the reactor, and trapping and separating powdered particles formed by powdering of the catalyst particles to obtain liquid hydrocarbons;
a catalyst particle trapping step of filtering a slurry extracted from a position lower than said top section of said slurry bed, trapping and separating the catalyst particles to obtain liquid hydrocarbons;
a catalyst particle return step of returning trapped catalyst particles in the catalyst particle trapping step to said reactor; and
a hydrocarbon recovery step of mixing said liquid hydrocarbons obtained in said powdered particle removal step and said liquid hydrocarbons obtained in said catalyst particle trapping step to recover a hydrocarbon oil.

2. The process for producing a hydrocarbon oil according to claim 1, further comprising:
a first fractional distillation step of fractionating fractionally distilling said hydrocarbon oil produced;
a hydroprocessing step of hydroprocessing each fraction of the fractionally distilled hydrocarbon oil from said first fractional distillation step; and
a second fractional distillation step of fractionally distilling the hydroprocessed hydrocarbon oil from said hydroprocessing step.

3. A synthesis reaction system, comprising:
a reactor main unit that contains a catalyst particle-containing slurry, and synthesizes hydrocarbons by subjecting carbon monoxide gas and hydrogen gas to a Fischer-Tropsch synthesis reaction;
a first outflow line, which is connected to a position that corresponds with a top section of a slurry bed inside said reactor main unit under normal operating conditions, and extracts a slurry from said reactor main unit;
a powdered particle-trapping filter with a pore size of smaller than 10 µm that filters said slurry extracted through said first outflow line;
a second outflow line, which is connected to a position lower than said first outflow line, and extracts a slurry from inside said reactor main unit;
a catalyst separator having a catalyst particle-trapping filter which filters said slurry extracted through said second outflow line and traps catalyst particles; and
a return line that returns catalyst particles trapped by said catalyst separator to said reactor main unit.

4. The synthesis reaction system according to claim 3, wherein a pore size of said catalyst particle-trapping filter is equal to or larger than 10 µm.
